# EUROPÄISCHE PATENTANMELDUNG

(11) **EP 2 824 218 A1**
(43) Veröffentlichungstag der Anmeldung: **14.01.2015**
(21) Anmeldenummer: 14175902.7
(22) Anmeldetag: 07.07.2014
(51) Int. Cl.: C25B 11/03, C25B 1/46, H01M 4/88, H01M 8/00, H01M 12/06

(54) **Verfahren zur Herstellung von transport- und lagerstabilen Sauerstoffverzehrelektroden**

(30) Priorität: 12.07.2013 DE 102013213740
(71) Anmelder: Bayer MaterialScience AG, 51368 Leverkusen (DE)
(72) Erfinder: Bulan, Andreas, 40764 Langenfeld (DE); Weber, Rainer, 51519 Odenthal (DE); Stelter, Michael, 09600 Wegefarth (DE); Bombach, Hartmund, 09599 Freiberg (DE); Palm, Katja, 09599 Freiberg (DE)
(74) Vertreter: BIP Patents

(57) **Zusammenfassung**

Es wird ein Herstellverfahren für Sauerstoffverzehrelektroden beschrieben, insbesondere für den Einsatz in der Chloralkali-Elektrolyse, und die sich durch eine gute Transport- und Lagerfähigkeit auszeichnen. Bei dem Verfahren wird ein silberoxidhaltiges Flächengebilde als Vorprodukt separat elektrochemisch reduziert wird. Die Erfindung betrifft ferner die Verwendung dieser Elektroden in der Chloralkali-Elektrolyse oder Brennstoffzellentechnik oder bei Metall/Luft Batterien.

## Beschreibung

Die Erfindung betrifft die Herstellung von Sauerstoffverzehrelektroden, insbesondere für den Einsatz in der Chloralkali-Elektrolyse, bei dem silberoxidbasierte Flächengebilde in einem Elektrolyten bestehend aus einer wässrigen Lösung eines Alkalihydroxid mit einer Konzentration von mindestens 0,001 mol/L elektrochemisch reduziert werden. Die entstehende Sauerstoffverzehrelektrode zeichnet sich durch eine gute Transport- und Lagerfähigkeit aus. Die Erfindung betrifft ferner die Verwendung dieser Elektroden in der Chloralkali-Elektrolyse, Metall-Luft-Batterie oder Brennstoffzellentechnik.

Die Erfindung geht von den an sich bekannten Verfahren zur Herstellung von Sauerstoffverzehrelektroden aus, die als Gasdiffusionselektroden ausgebildet sind und üblicherweise einen elektrisch leitenden Träger und eine Gasdiffusionsschicht mit einer katalytisch aktiven Komponente umfassen.

Verschiedene Vorschläge zu Herstellung und Betrieb der Sauerstoffverzehrelektroden in Elektrolysezellen in technischer Größe sind aus dem Stand der Technik grundsätzlich bekannt. Die Grundidee dabei ist, die Wasserstoff entwickelnde Kathode der Elektrolyse (beispielsweise in der Chloralkali-Elektrolyse) durch die Sauerstoffverzehrelektrode (Kathode) zu ersetzen. Anode und Kathode sind hierbei durch eine Ionenaustauschermembran getrennt. Eine Übersicht über die möglichen Zelldesigns und Lösungen kann der Veröffentlichung von Moussallem et al "Chlor-Alkali Electrolysis with Oxygen Depolarized Cathodes: History, Present Status and Future Prospects", J. Appl. Electrochem. 38 (2008) 1177-1194 entnommen werden.

Die Sauerstoffverzehrelektrode - im Folgenden auch kurz SVE genannt - muss eine Reihe von Anforderungen erfüllen, um in technischen Elektrolyseuren einsetzbar zu sein. So müssen der Katalysator und alle anderen verwendeten Materialien chemisch stabil sein gegen Natronlauge von ca. 32 Gew.% und gegenüber reinem Sauerstoff bei einer Temperatur von typischerweise 80 - 90°C. Ebenso wird ein hohes Maß an mechanischer Stabilität gefordert, da die Elektroden in Elektrolyseuren einer Größe von üblicherweise mehr als 2 m² Fläche (technische Größe) eingebaut und betrieben werden. Weitere wünschenswerte Eigenschaften sind: eine hohe elektrische Leitfähigkeit, eine geringe Schichtdicke, eine hohe innere Oberfläche und eine hohe elektrochemische Aktivität des Elektrokatalysators. Geeignete hydrophobe und hydrophile Poren und eine entsprechende Porenstruktur zur Leitung von Gas und Elektrolyt sind insbesondere ebenso notwendig, wie eine Dichtigkeit, so dass Gas und Flüssigkeitsraum wirksam voneinander getrennt bleiben. Die Langzeitstabilität und geringe Herstellkosten sind weitere besondere Anforderungen an eine technisch nutzbare Sauerstoffverzehrelektrode.

Eine Sauerstoffverzehrelektrode besteht typischerweise aus einem Trägerelement, zum Beispiel einer Platte aus porösem Metall oder Gewebe aus Metalldrähten, und einer elektrochemisch aktiven Beschichtung. Die elektrochemisch aktive Beschichtung ist mikroporös und besteht aus hydrophilen und hydrophoben Bestandteilen. Die hydrophoben Bestandteile erschweren das Eindringen von Elektrolyt und halten somit die entsprechenden Poren für den Transport des Sauerstoffs zu den katalytisch aktiven Zentren in der Elektrode frei. Die hydrophilen Bestandteile ermöglichen das Eindringen des Elektrolyten zu den katalytisch aktiven Zentren und den Abtransport der Hydroxid-Ionen. Als hydrophobe Komponente wird in der Regel ein fluorhaltiges Polymer wie Polytetrafluorethylen (PTFE) eingesetzt, welches zudem als polymerer Binder des Katalysators dient. Bei Elektroden mit Silber-Katalysator dient das Silber als hydrophile Komponente.

Als Katalysator für die Reduktion von Sauerstoff werden eine Vielzahl von Verbindungen beschrieben.

So liegen Berichte über den Einsatz von Palladium, Ruthenium, Gold, Nickel, Oxiden und Sulfiden von Übergangsmetallen, Metall-Porphyrinen und Phthalocyaninen, und Pervoskiten als Katalysator für Sauerstoffverzehrelektroden vor.

Praktische Bedeutung als Katalysator für die Reduktion von Sauerstoff in alkalischen Lösungen haben jedoch nur Platin und Silber erlangt.

Platin besitzt eine sehr hohe katalytische Aktivität für die Reduktion von Sauerstoff. Wegen der hohen Kosten von Platin wird dieses ausschließlich in geträgerter Form eingesetzt. Bevorzugtes Trägermaterial ist dabei Kohlenstoff. Kohlenstoff leitet den elektrischen Strom zu dem Platin-Katalysator. Die Poren in den Kohlenstoff-Partikeln lassen sich durch Oxidation der Oberfläche hydrophil einstellen und werden hierdurch geeignet für den Transport des Elektrolyten. SVE mit kohlenstoffgeträgerten Platin-Katalysatoren zeigen eine gute Leistung. Die chemische Beständigkeit kohlenstoffgeträgerter Platinelektroden im Dauerbetrieb ist jedoch unzureichend, vermutlich, weil durch Platin auch die Oxidation des Trägermaterials katalysiert wird. Kohlenstoff begünstigt zudem die unerwünschte Bildung von H₂O₂ bei der Elektrolyse.

Silber hat ebenfalls eine hohe katalytische Aktivität für die Reduktion von Sauerstoff.

Silber kann in kohlenstoffgeträgerter Form oder als feinteiliges metallisches Silber eingesetzt werden.

SVE mit kohlenstoffgeträgertem Silber weisen üblicherweise Silber-Beladung von 20 - 50 g/m² auf. Obwohl die kohlenstoffgeträgerten Silber-Katalysatoren haltbarer sind als die entsprechenden Platin-Katalysatoren, ist ihre Langzeitstabilität unter den Bedingungen der Chlor-Alkali Elektrolyse beschränkt.

Bevorzugt wird ungeträgertes Silber als Katalysator eingesetzt. Bei SVE mit Katalysatoren aus ungeträgertem metallischem Silber treten naturgemäß keine Stabilitätsprobleme durch Zersetzung des Katalysatorträgers auf.

Bei der Herstellung von SVE mit ungeträgertem Silber-Katalysator wird das Silber bevorzugt zumindest teilweise in Form von Silberoxiden eingebracht werden, welche dann zu metallischem Silber reduziert werden. Bei der Reduktion der Silberverbindungen kommt es auch zu einer Änderung in der Anordnung der Kristallite, insbesondere auch zu einer Brückenbildung zwischen einzelnen Silberpartikeln. Dies führt insgesamt zu einer Verfestigung der Struktur.

Bei der Fertigung von Sauerstoffverzehrelektroden kann man prinzipiell zwischen trockenen und nassen Fertigungsverfahren unterscheiden.

Bei den trockenen Herstellungsverfahren wird ein Gemisch aus Katalysator und polymerer Komponente (meistens PTFE) zu feinen Partikeln gemahlen, welche anschließend auf ein elektrisch leitendes Trägerelement verteilt und bei Raumtemperatur verpresst werden. Ein solches Verfahren ist beispielsweise in EP 1728896 A2 beschrieben.

Bei den nassen Fertigungsverfahren wird entweder eine Paste oder eine Suspension bestehend aus Katalysator und polymerer Komponente in Wasser oder einer anderen Flüssigkeit verwendet. Bei der Herstellung der Suspension können oberflächenaktive Substanzen zugegeben werden, um deren Stabilität zu erhöhen. Eine Paste wird anschließend über Siebdruck oder Kalandrieren auf den Träger aufgebracht, während die weniger viskose Suspension üblicherweise aufgesprüht wird. Der Träger mit der aufgebrachten Paste bzw. Suspension wird getrocknet und gesintert. Die Sinterung erfolgt bei einer Temperatur im Bereich des Schmelzpunktes des Polymers. Weiterhin kann eine Verdichtung der SVK nach dem Sintern auch bei höherer Temperatur (bis zum Schmelzpunkt, Erweichungs- oder Zersetzungspunkt des Polymers) als Raumtemperatur erfolgen.

Die nach diesen bekannten Verfahren hergestellten silberoxidbasierten Elektroden werden ohne weitere Behandlung in den Elektrolyseur eingebaut. Die Reduktion der Silberoxide zu metallischem Silber erfolgt nach Befüllen des Elektrolyseurs mit dem dann dort vorhandenen Elektrolyten während der ersten Inbetriebnahme, dies heißt mit dem Einschalten des Elektrolysestromes.

Nun hat sich gezeigt, dass silberoxidbasierten Elektroden bei der Handhabung eine Reihe von Nachteilen aufweisen. So ist die Katalysatorschicht mechanisch nicht sehr stabil wodurch es leicht zu Beschädigungen wie dem Abplatzen von Teilen der nicht reduzierten Katalysatorschicht kommen kann. Insbesondere beim Einbau der silberoxidbasierten Elektroden in den Elektrolyseur muss die silberoxidbasierte Elektrode geknickt werden. Die hierbei entstehenden Beschädigungen führen im Betrieb zur Undichtigkeit.

Elektroden für industrielle Anlagen werden häufig in zentralen Fertigungsstellen hergestellt und von dort an die einzelnen Einsatzorte transportiert. Hierdurch werden an die Transport- und Lagerfähigkeit besondere Anforderungen gestellt. Die SVE müssen unempfindlich sein gegen mechanische und thermische Beanspruchungen während des Transports und beim Einbau vor Ort.

Ebenfalls kann ein größerer Zeitraum zwischen Fertigung der silberoxidbasierten Elektrode und deren Einbau in den Elektrolyseur als auch zwischen Einbau der silberoxidbasierten Elektrode in den Elektrolyseur und Inbetriebnahme des Elektrolyseurs liegen.

Ist das silberoxidbasierte Flächengebilde in den Elektrolyseur eingebaut und steht längere Zeit ohne Inbetriebnahme, kann eine Leistungsverschlechterung auftreten. Im Elektrolyseur befindet sich die Ionenaustauschermembran, die feucht gehalten werden muss. Somit ist die eingebaute silberoxidbasierte Elektrode immer einer hohen Umgebungsfeuchtigkeit ausgesetzt, die auf die Edelmetalloxide einen negativen Einfluss hat. Beginnende Hydrolyseprozesse verändern vermutlich die Kornoberfläche des Elektrokatalysators und damit die nach der Reduktion vorliegende elektrochemisch aktive Oberfläche. Diese Veränderung wirkt sich beispielsweise ungünstig auf die Elektrolysespannung im Betrieb aus.

Die Aktivität der entstehenden SVE wird unter anderem von den Bedingungen beeinflusst, unter denen das Silberoxid zu metallischem Silber reduziert wird. Bei einer industriellen Anlage für die Herstellung von Chlor und Natronlauge kann nicht sichergestellt werden, dass beim Anfahren einer silberoxidbasierten Elektrode die für die Reduktion optimalen Bedingungen eingehalten werden.

Methoden zur Reduktion von Silberoxiden in Elektroden sind z. B. in DE 3710168 A1 beschrieben. Genannt werden die kathodische Reduktion in Kalilauge und die chemische Reduktion mit Zink. Ebenso wird beschrieben, dass das silberoxidbasierte Flächengebilde in einen Elektrolyseur eingebaut werden kann und die Reduktion des Silberoxids zu Beginn der Elektrolyse durchgeführt wird.

Die Reduktion mit Zink oder auch mit anderen Metallen bringt in der Praxis erhebliche Probleme mit sich. Insbesondere sind die Kontamination der Elektrode mit dem jeweiligen Metall bzw. Metalloxid und die Gefahr der Verstopfung der Poren zu nennen.

Erfolgt die Reduktion des silberoxidbasierten Flächengebilde bei der Inbetriebnahme der Chlor-Alkali Elektrolyse, so zeigte sich bei eigenen unveröffentlichten Versuchen, dass der Chlorid-Gehalt der Alkalihydroxidlösung während der Inbetriebnahme stark ansteigt. Dies erfolgt insbesondere dann, wenn Elektrolyte in technischen Elektrolyseuren aufgeheizt wurden. In technischen Elektrolyseuren dauert die Aufheizphase bis zu der Temperatur, bei der der Gleichrichter eingeschaltet werden kann, typischerweise bis zu 4 Stunden. Hierbei werden die Elektrolyte durch den Elektrolyseur und den Wärmetauscher, der sich in jedem Elektrolytkreislauf befindet, gepumpt. Im Elektrolyseur wandern offenbar Chlorid-Ionen über die Ionenaustauschermembran in die Alkalihydroxidlösung und erhöhen kontinuierlich den Gehalt an Chlorid-Ionen. Wird letztendlich der Elektrolysestrom eingeschaltet erfolgt die Reduktion des silberoxidbasierten Flächengebildes in Gegenwart eines stark chloridhaltigen Elektrolyten, wodurch wie beobachtet wurde die Performance der entstehenden SVE stark beeinträchtigt wird.

In der DE 3710168 wird beschrieben, dass die reduzierte SVE gewässert und anschließend getrocknet wird. Nachteil der Wässerung ist, dass hierbei ein längerer Kontakt der SVE mit Wasser und Resten von in die SVE eingedrungenen Elektrolyten oder an der SVE anhaftenden Elektrolyten erfolgt, wodurch es zu einer Schädigung der SVE kommen kann.

Durch Reduktion des Silberoxids der silberoxidbasierten Elektrode unter den Bedingungen der Chlor-Alkali Elektrolyse, das heißt beispielsweise in ca. 30 Gew.-%iger Natronlauge, verbleibt, wie ebenfalls beobachtet wurde eine große Menge hochkonzentriertes Alkalihydroxid im Porensystem der SVE zurück, welches sich nur schwer entfernen lässt. Bei der Lagerung dieser Elektrode kann durch Verdunsten von Wasser die Alkalihydroxidlösung aufkonzentriert werden. Hierbei kann das Alkalihydroxid auskristallisieren und dadurch die Poren der Elektrode verstopfen bzw. durch die sich bildenden Kristalle die Poren irreversibel zerstören. Zur Vermeidung der genannten Probleme müsste die Alkalilauge nach der Reduktion aus der Elektrode vollständig entfernt werden. Dies ist bei einer feinporösen Elektrode nur schwer durchführbar. Da auch eine in konzentrierter Alkalilauge reduzierte silberoxidbasierte Elektrode immer Spuren der hoch konzentrierten Alkalilauge enthält, wird der Einbau der Elektrode in den Elektrolyseur durch erhöhte Sicherheitsmaßnahmen erschwert (Vermeidung von Verätzungen durch hoch konzentrierte Alkalilauge).

Insbesondere die bei der Lagerung auftretenden Temperaturwechselbelastungen können zu Verdunstung und Kondensation von Wasser führen, wodurch durch Kristallisations- und Lösungsvorgänge der Alkalihydroxide Änderungen in der Struktur erfolgen, welche wiederum zur Zerstörung des Porensystems der Elektrode führen können.

Die genannten Methoden sind wenig geeignet zur Herstellung von silberoxidbasierten Sauerstoffverzehrelektroden, welche eine gute Leistungsfähigkeit, das heißt eine möglichst niedrige Zellspannung ermöglichen, eine ausreichende mechanische Stabilität und eine hohe Lagerstabilität aufweisen.

Die Aufgabe der vorliegenden Erfindung besteht darin, eine funktionsfertige Sauerstoffverzehrelektrode, insbesondere für den Einsatz in der Chloralkali-Elektrolyse, bereitzustellen, die eine gute Leistungsfähigkeit hat und transport- und lagerstabil ist.

Die spezielle Aufgabe der vorliegenden Erfindung besteht darin ein Verfahren zu finden, mit welchem silberoxidhaltige Vorprodukte in eine Sauerstoffverzehrelektrode (nachfolgend auch kurz SVE genannt) überführt werden können, die zum einen eine langzeitstabile, leistungsfähige Silberkatalysatorschicht aufweist. Zum anderen soll die entstehende Sauerstoffverzehrelektrode unempfindlich gegen Schädigungen bei Transport, und Lagerung sowie gegen Feuchtigkeit und mechanisch ausreichend stabil für den Einbau in den Elektrolyseur sein.

Gegenstand der Erfindung ist ein Verfahren zur Herstellung einer transport-, lagerstabilen und mechanisch stabilen flächigen Sauerstoffverzehrelektrode, mindestens aufweisend einen Träger, der insbesondere elektrisch leitend ist, die ferner eine Gasdiffusionsschicht und eine, einen auf Silber basierenden Katalysator enthaltende Schicht umfasst, dadurch gekennzeichnet, dass der Träger mit einem silberoxidhaltigen Gemisch aus Elektrokatalysator und einem hydropoben Material unter Formung eines silberoxidhaltigen Flächengebildes als Vorprodukt beschichtet wird und das silberoxidhaltige Flächengebilde in einem wässrigen Elektrolyt bei einem pH Wert von mindestens 10 insbesondere in Gegenwart von Alkalilauge, besonders bevorzugt von Natronlauge, elektrochemisch reduziert und die entstandene Elektrode anschließend möglichst weitgehend vom wässrigen Elektrolyt befreit wird. Die Befreiung vom Elektrolyten bedeutet hierbei, dass im Wesentlichen das Wasser aus den Elektroden entfernt wird.

Die Temperatur des Elektrolyten beträgt dabei bevorzugt von 10 bis 90°C, besonders bevorzugt 20 bis 80°C, ganz besonders bevorzugt 30 bis 60°C. Die Stromdichte bei der Reduktion beträgt bei der Reduktion bevorzugt mindestens 0,01 kA/m² besonders bevorzugt 0,01 bis 6 kA/m².

Der Elektrolyt besteht in einer bevorzugten Ausführung aus einer wässerigen Alkalihydroxid-Lösung wobei die Konzentration an Alkalihydroxid mindestens 0,001 mol/L, bevorzugt 0,001 bis 3,2 mol/L beträgt. Zusätzlich werden bevorzugt in den Elektrolyten zur Steigerung seiner elektrischen Leitfähigkeit ein oder mehrere Salze eines Elementes aus der Alkali- oder Erdalkaligruppe, bevorzugt Alkalisulfate oder Alkalinitrate, besonders bevorzugt Alkalinitrate, zugesetzt.

Als Zusatz zum Elektrolyt können insbesondere auch komplexe Silbercyanide wie Natriumcyanoargentat oder Kaliumcyanoargentat oder Silbermolybdat eingesetzt werden. Auch können Kombinationen mehrere Salze als Elektrolyten eingesetzt werden. So kann zum Beispiel bevorzugt ein Gemisch aus Natriumnitrat und Natriumsulfat als Zusatz eingesetzt werden.

Es ist möglich in einer bevorzugten Ausführung weitere Zusätze zum Elektrolyten zu zusetzen, wie sie zum Beispiel aus der Galvanik grundsätzlich bekannt sind, insbesondere oberflächenaktive Substanzen. Das silberoxidhaltige Flächengebilde als Vorprodukt für die Elektrode umfasst insbesondere wenigstens miteinander verpresstes Silberoxid-Pulver und ein feinteiliges, insbesondere hydrophobes Material, bevorzugt PTFE-Pulver, gegebenenfalls zusätzlich Silberpulver und weitere Füllstoffe z.B. Zirkondioxid.

Die Reduktion des silberoxidbasierten Flächengebildes kann in einer Zelle bestehend aus einer Anode, einem Elektrolyten und einer Vorrichtung zur Aufnahme und Ladungszuführung für das kathodisch zu schaltende silberoxidbasierte Flächengebilde erfolgen. Hierbei können aus der Galvanotechnik bekannte Techniken eingesetzt werden.

Anode und das silberoxidbasierte Flächengebilde können in eine Kammer ohne Trennung eintauchen. Da im Verlauf der elektrochemischen Reduktion an der sich bildenden SVE Wasserstoff entwickelt werden kann, welcher mit dem an der Anode entstehenden Sauerstoff ein explosives Gemisch bilden würde, ist es jedoch vorteilhaft und bevorzugt, Anode und Kathode räumlich zu trennen. Dies kann zum Beispiel durch ein Diaphragma oder eine Membran geschehen. Die in den jeweiligen Gasraum gelangenden Gase werden dann getrennt abgeführt. Die Gefährdung durch Wasserstoff kann aber auf andere, dem Fachmann bekannte Weise, vorgebeugt werden, zum Beispiel durch Spülen des Gasraums oberhalb der Elektrode mit einem Inertgas.

Die Gestaltung der Anode erfolgt in der dem Fachmann der Elektrolyse bekannter Weise. Form und Anordnung sind bevorzugt so zu wählen, dass die Stromdichte an der Kathode gleichmäßig verteilt ist. Bevorzugt ist die Ausführung der Anode aus Titan oder Nickel, insbesondere in Form eines Streckmetalls aus Titan, oder beschichtetem Nickel insbesondere einem mit Platin überzogenen Nickelblech. Die Anode kann an der Oberfläche mit weiteren Materialien wie z.B. Iridiumoxid beschichtet werden, welche die Überspannung der Sauerstoffentwicklung herabsetzen. Des Weiteren können zwei Anoden mit dazwischen befindlichem Vorprodukt eingesetzt werden, so dass die elektrochemische Reduktion des silberoxidbasierten Flächengebildes von zwei Seiten aus erfolgen kann. Hiermit wird der Herstellungsprozess der Elektrode beschleunigt.

Die Konzentration des Alkalihydroxids im Elektrolyten wird bevorzugt in einem breiten Bereich insbesondere von mindestens 0,001 Mol/L besonders bevorzugt 0,001 Mol/L bis 3,2 Mol/L gewählt, wobei die Konzentration auch durch die Löslichkeit im Elektrolyten vorgegeben sein kann. Bevorzugt wird eine Konzentration des Elektrolyten gewählt, die einen geringen Spannungsabfall über den Elektrolyten ermöglicht und damit die Elektrolysespannung möglichst niedrig bleibt.

Der pH-Wert des Elektrolyten ist größer oder gleich pH 10 und wird aus praktischen Gründen bevorzugt kleiner gleich pH 14,5 gewählt. Zur Regulierung des pH-Wertes können bevorzugt auch Puffersubstanzen wie z.B. Natriumphosphate dem Elektrolyt zugegeben werden.

Es wurde insbesondere gefunden, dass sich eine größere Konzentration von Chloridionen im Elektrolyten negativ auf die Performance der hergestellten SVE auswirkt. Es besteht die Gefahr, dass sich in der Elektrode Silberchlorid bilden kann, welches erheblich schwieriger als Silberoxid reduzierbar ist. So ist in einer bevorzugten Ausführung des neuen Verfahrens darauf zu achten, dass im Elektrolyten wenig oder keine Chlorid-Ionen vorhanden sind. Der Chlorid-Gehalt im Elektrolyt sollte daher in einer bevorzugten Ausführung des neuen Verfahrens höchstens 1.000 mg/L, besonders bevorzugt höchstens 700 mg/L, ganz besonders bevorzugt höchstens 500 mg/L Chlorid betragen.

Bei Trennung von Anoden- und Kathodenraum durch eine Membran besteht die Möglichkeit, auf Seiten der Anode und der Kathode jeweils unterschiedliche Elektrolyte einzusetzen. Auf der Kathodenseite bleiben die Anforderungen an den Elektrolyten die gleichen, als wenn die Zelle ohne Trennung von Anoden- und Kathodenraum betrieben wird. Auf der Anodenseite lassen sich jedoch Elektrolyte einsetzen, die unabhängig von den Anforderungen an den Elektrolyten auf der Kathodenseite sind. So kann auf der Anodenseite eine Alkalihydroxid-Lösung mit einem sehr hohen Alkalihydroxid-Gehalt als Elektrolyt eingesetzt werden, durch die Erhöhung der Hydroxidionen-Konzentration ergibt sich eine Verringerung des Spannungsabfalls über den Elektrolyten auf der Anodenseite.

Zur Konditionierung des Elektrolyten können die aus der Galvanik bekannten Techniken angewandt werden, zum Beispiel Umpumpen, Kühlen, Filtrieren.

Das zu reduzierende silberoxidhaltige Flächengebilde wird in einem bevorzugten Verfahren so in die Apparatur zur elektrochemischen Reduktion eingebracht, dass ein gleichmäßiger Stromfluss über die gesamte Elektrodenfläche erfolgt und eine gleichmäßige Reduktion über die gesamte Fläche stattfinden kann. Entsprechende Techniken sind dem Fachmann grundsätzlich bekannt. Bei unterschiedlicher Beschichtung auf der Vorder- und Rückseite des elektrisch leitenden Trägerelements erfolgt die Anordnung z. B. bevorzugt so, dass die Flächenseite des Flächengebildes mit dem höheren Gehalt an Silberoxid der Anode zugewandt ist.

Gemäß einer bevorzugten Ausführung des neuen Verfahrens wird das silberoxidbasierte Flächengebilde vor Einbringung in die Reduktionsapparatur durch Einlegen in Wasser oder bevorzugt in den später während der Reduktion verwendeten Elektrolyten konditioniert. Die Konditionierung kann über mehrere Stunden, bevorzugt mindestens 0,01 bis 8 h erfolgen und hat das Ziel, die hydrophilen Poren möglichst vollständig mit Flüssigkeit bzw. Elektrolyt zu füllen. Für die Stromzufuhr zum silberoxidbasierten Flächengebilde gibt es verschiedene Möglichkeiten. So kann die Stromzufuhr über den Träger für den Fall eines elektrisch leitenden Trägers erfolgen, zum Beispiel in der Weise, dass der Träger in seinem Randbereich nicht beschichtet wird und die Stromzufuhr über eine Klemme oder andere Verbindung über den elektrisch leitenden Träger erfolgt.

Die Stromzufuhr kann aber auch über ein flächig auf dem silberoxidbasierten Flächengebilde aufliegendes elektrisch leitendes Bauteil erfolgen, zum Beispiel einem Streckmetall oder einem Metallgewebe oder Gewirk. Die Stromübertragung erfolgt in einer solchen Anordnung über eine Vielzahl von Kontaktpunkten zwischen Beschichtung und elektrisch leitendem Bauteil.

Die Reduktion erfolgt in einer bevorzugten Ausführung des Verfahrens zweckmäßigerweise bei einer Stromdichte von mindestens 0,01 kA/m². Eine niedrigere Stromdichten als 0,01 kA/m² ist ebenfalls möglich, verlängert aber unnötig die Herstellungszeit für die Elektrode. Bevorzugt wird aber bei möglichst höherer Stromdichte reduziert. So wird eine Stromdichte von mindestens 0,5 kA/m² bevorzugt eingesetzt. Da der apparative Aufwand mit steigender Stromdichte steigt, dürfte derzeit die praktikable Obergrenze bei 6 kA/m² liegen, wobei grundsätzlich, sofern die technischen Voraussetzungen gegeben sind, auch bei höherer Stromdichte bis 10 kA/m² und höher reduziert werden kann. Ein besonders bevorzugtes Verfahren ist daher dadurch gekennzeichnet, dass die Reduktion bei einer Stromdichte von 0,01 bis 6 kA/m² erfolgt.

Die Stromdichte kann von Beginn bis zum Ende der Reduktion konstant gehalten werden. Es ist jedoch auch möglich und besonders bevorzugt, bei niedrigerer Stromdichte die Reduktion zu starten und dann allmählich oder auch in Stufen die Stromdichte zu erhöhen. Dies ergibt eine gleichmäßigere Silberbildung und die Vermeidung lokaler Silbernester, die vermehrt Wasserstoff bilden.

Die zeitliche Dauer der Reduktion richtet sich nach dem gewünschten Reduktionsgrad, der Stromdichte, der Beladung der Elektrode mit Silberoxid und den Verlusten durch Nebenreaktionen.

In der Regel reicht es in einer bevorzugten Ausführung des Verfahrens, wenn etwa 50 % des Silberoxids im flächigen Vorprodukt zu metallischem Silber reduziert werden, um, insbesondere bei schneller Weiterverarbeitung der Elektroden in Elektrolyseuren, eine für den Transport ausreichend feste SVE zu erhalten. Um Probleme zum Beispiel durch Veränderung des verbleibenden Silberoxids durch Feuchtigkeit auszuschließen, wird jedoch besonders bevorzugt eine Reduktion von über 90 %, ganz besonders bevorzugt eine vollständige Reduktion angestrebt. Der Grad der Reduktion wird am Ausmaß der Wasserstoffentwicklung und dem daraus resultierenden Anstieg der Elektrolysespannung erkannt.

Bekanntlich wird für die Reduktion von 1,118 g einwertigen Silberionen eine Ladungsmenge von 1000 Coulomb (entsprechend 1.000 Ampere x Sekunde) benötigt, bei zweiwertigen Silber wird entsprechend die doppelte Ladungsmenge benötigt. Bei einer Beladung mit 4.600 g Silber (I)-Oxid pro m² werden theoretisch für eine vollständige Reduktion 1064 Ah benötigt. Aufgrund von Nebenreaktionen wird die tatsächliche benötigte Ladungsmenge höher sein.

Die zeitliche Dauer der Reduktion kann über den gewählten Elektrolysestrom gesteuert werden.

Während der Reduktion erwärmt sich der Elektrolyt. Die entstehende Wärme kann durch entsprechende Kühlung abgeführt werden. Hierbei kann der Elektrolyt im Elektrolyseur umgepumpt werden, sofern im Elektrolyseur selbst ein Wärmetauscher installiert ist. Alternativ kann der Wärmetauscher auch außerhalb der Zelle montiert sein, hierbei ist ein externer Elektrolytkreislauf notwendig. Die Reduktion kann aber auch adiabatisch mit steigenden Elektrolyseurtemperaturen erfolgen.

In einer bevorzugten Ausführung des neuen Verfahrens wird die Gasdiffusionsschicht und die Katalysator enthaltene Schicht durch eine einzige Schicht gebildet. Dies wird beispielsweise dadurch erreicht, dass die Gasdiffusionsschicht und die Katalysator enthaltene einzelne Schicht durch Verwendung eines einzigen Gemisches aus Silberoxid enthaltendem Pulver und hydrophobem Pulver, insbesondere PTFE Pulver, auf dem Träger geformt und dann mit dem neuen Verfahren reduziert wird.

In einer bevorzugten Variante des neuen Verfahrens wird die Gasdiffusionsschicht und die Katalysator enthaltene Schicht durch mindestens zwei unterschiedliche Schichten gebildet. Dies wird beispielsweise dadurch erreicht, dass die Gasdiffusionsschicht und die den Katalysator enthaltenden Schichten durch Verwendung mindestens zweier unterschiedlicher Gemische aus Silberoxid enthaltendem Pulver und hydrophobem Pulver, insbesondere PTFE Pulver, mit unterschiedlichem Gehalt an Silberoxid in zwei oder mehr Schichten auf dem Träger geformt und dann mit dem neuen Verfahren reduziert wird.

Die Fertigung einer SVE nach dem erfindungsgemäßen Verfahren soll im Folgenden im Detail näher erläutert werden, ohne die Gültigkeit der Erfindung auf die im Folgenden aufgeführten speziellen Ausführungsformen zu beschränken.

Die Herstellung des silberoxidhaltigen Vorprodukts erfolgt z. B. analog zu den an sich bekannten Techniken zur Herstellung von SVE im Nass- oder Trockenherstellungsverfahren.

Beispielsweise wird im Nassherstellungsverfahren eine eingesetzte wässrige Suspension oder Paste aus Silberoxid-Pulver, einem fluorhaltigen Polymer, zum Beispiel Polytetrafluorethylen (PTFE), und gegebenenfalls einem Verdicker (zum Beispiel Methylcellulose) und einem Emulgator durch Mischen der Komponenten mit einem hochtourigen Mischer hergestellt. Hierzu wird zuerst aus Silberoxid-Pulver, dem Verdicker (zum Beispiel Methylcellulose) und dem Emulgator eine Suspension in Wasser und/oder Alkohol hergestellt. Diese Suspension wird dann mit einer Suspension eines fluorhaltigen Polymeren, wie sie zum Beispiel unter der Bezeichnung Dyneon™ TF5035R im Handel erhältlich ist, vermischt. Die so erhaltene Emulsion oder Paste wird dann nach bekannten Verfahren auf einen Träger aufgebracht, getrocknet und gesintert, wobei dieser Prozess mehrmals wiederholt werden kann. Um bei der nachfolgenden Reduktion die Stromzufuhr über direkten Kontakt zu dem Trägerelement zu ermöglichen, kann der Rand des elektrisch leitenden Trägerelements von der Beschichtung freigehalten werden.

Alternativ wird im besonders bevorzugten Trockenherstellungsverfahren eine Pulvermischung durch Mischung eines Gemisches aus PTFE oder einem anderen fluorhaltigen Polymer, Silberoxid und gegebenenfalls zusätzlich Silberpartikel in einem Mischer mit schnell rotierenden Mischwerkzeugen hergestellt. Bei dem Mischvorgang ist jeweils insbesondere darauf zu achten, dass die Temperatur der Mischung in einem Bereich von 35 bis 90°C, besonders bevorzugt von 40 bis 80°C gehalten wird.

Die Pulvermischung wird dann in grundsätzlich bekannter Weise auf einen Träger aufgebracht und verdichtet. Um bei der nachfolgenden Reduktion die Stromzufuhr über direkten Kontakt zu dem Trägerelement zu ermöglichen, kann bei einem elektrisch leitenden Träger auch hier der Rand des Trägerelements von der Beschichtung freigehalten werden.

Das nach dem Nass- oder Trockenverfahren hergestellte silberoxidhaltige Flächengebilde kann gemäß dem oben beschriebenen Verfahren in einem Bad mit Wasser oder einem Elektrolyt bis zu mehreren Stunden konditioniert werden. Die Temperatur hierbei kann 10 bis 90°C betragen.

Die gegebenenfalls konditionierte Elektrode wird dann in eine Apparatur zur elektrochemischen Reduktion überführt.

Als Anode bei der Reduktion wird bevorzugt eine Sauerstoff entwickelnde Elektrode gewählt. Dies kann zum Beispiel ein mit Platin überzogenes Nickelblech oder ein mit Iridiumoxid beschichtetes Titanblech sein. Es können aber auch andere Anodenformen wie z.B. Gitter oder Streckmetalle eingesetzt werden.

Die Fläche der Anode sollte möglichst mindestens gleich groß wie die Fläche der zur reduzierenden silberoxidhaltigen Flächengebildes sein.

Für die Reduktion wird bevorzugt eine Stromdichte 0,01 bis 6 kA/m² gewählt. Die Elektrolysespannung ergibt sich nach der Anordnung der Elektroden / Diaphragmen oder Ionenaustauschern in der Elektrolysezelle und der Art des Elektrolyten.

Der Elektrodenabstand beträgt dabei bevorzugt 0,5 bis 4 cm und wird bevorzugt minimiert.

Im Anschluss wird die lagerstabile fertige SVE der Elektrolysezelle entnommen. Anhaftenden Elektrolyt lässt man ablaufen, das Ablaufen des Elektrolyten kann durch weitere, dem Fachmann an sich bekannte Techniken wie zum Beispiel Anblasen mit Luft, unterstützt werden. Die SVE kann dann mit deionisiertem Wasser gespült werden, zum Beispiel durch Abspritzen oder Eintauchen in ein Bad mit deionisiertem Wasser. Zur Entfernung von Elektrolyt aus dem Porensystem kann die SVE für längere Zeit, beispielsweise für 30 min in einem Wasserbad bei 20°C oder höherer Temperatur, gelagert werden.

Die SVE wird im Anschluss getrocknet. Die Trocknung kann durch Lagerung an Luft bei Umgebungstemperatur, bei Temperaturen von 0 bis 30°C oder in Trocknern bei höheren Temperaturen und/oder bei vermindertem Druck erfolgen. Die Temperatur bei der Trocknung wird so gewählt, dass sich eine Trocknungszeit von mehr als 0,05 h ergibt.

Die so hergestellte SVE ist in der Struktur deutlich verfestigt. Die SVE ist unempfindlich gegen mechanische Schädigungen und kann problemlos transportiert und beispielsweise in eine Chlor-Alkali Elektrolysezelle eingebaut werden. Die SVE behält ihre Aktivität auch bei längerer Lagerung in feuchter Atmosphäre, wie sie beispielsweise innerhalb von Elektrolyseuren auftritt. Im Falle des Betriebs in technischen Chlor-Alkali-Elektrolyseuren muss bei der Inbetriebnahme einer aus dem neuen Verfahren erhältlichen SVE vorteilhafterweise nicht mehr auf die ChloridKonzentration in der Alkalilauge geachtet werden.

Gegenstand der Erfindung ist daher auch eine aus dem neuen Verfahren erhaltene Sauerstoffverzehrelektrode.

Die nach dem erfindungsgemäßen Verfahren hergestellte Sauerstoffverzehrelektrode wird bevorzugt als Kathode geschaltet, insbesondere in einer Elektrolysezelle für die Elektrolyse von Alkalichloriden, bevorzugt von Natriumchlorid oder Kaliumchlorid, besonders bevorzugt von Natriumchlorid.

Ebenfalls kann die nach dem erfindungsgemäßen Verfahren hergestellte Sauerstoffverzehrelektrode bevorzugt als Kathode in einer Brennstoffzelle geschaltet werden. Bevorzugte Beispiele für solche Brennstoffzellen sind die alkalischen Brennstoffzellen. Eine weitere Einsatzmöglichkeit ist die Metall-Luft-Batterie.

Weiterer Gegenstand der Erfindung ist daher die Verwendung der nach dem erfindungsgemäßen Verfahren hergestellten Sauerstoffverzehrelektrode zur Reduktion von Sauerstoff im Alkalischen insbesondere als Sauerstoff verzehrende Kathode in der Elektrolyse, bevorzugt in der Chloralkali-Elektrolyse, oder als Elektrode in einer Brennstoffzelle oder als Elektrode in einer Metall/Luft-Batterie.

Die Erfindung wird nachfolgend durch die Beispiele, welche jedoch keine Beschränkung der Erfindung darstellen, näher erläutert.

### Beispiele

### Beispiel 1 (erfindungssemäß)

3,5 kg einer Pulvermischung, bestehend aus 7 Gew.-% PTFE-Pulver, Dyneon, Typ 2053, 88 Gew.-% Silber-I-Oxid und 5 Gew.-% Silberpulver des Typs 331 der Fa. Ferro, wurden in einem Mischer der Fa. Eirich, Typ R02, ausgerüstet mit einem Sternwirbler als Mischelement, bei einer Drehzahl von 5000 U/min so gemischt, dass die Temperatur der Pulvermischung 55°C nicht übersteigt. Dies wurde dadurch erreicht, dass der Mischvorgang bei einer Temperatur nahe 55°C unterbrochen und die Mischung abgekühlt wurde. Insgesamt wurde das Mischen dreimal durchgeführt. Nach dem Mischen wurde die Pulvermischung mit einem Sieb, welches eine Maschenweite von 1,0 mm aufwies, gesiebt.

Die gesiebte Pulvermischung wurde anschließend auf ein Netz (Träger) aus Nickel mit einer Drahtdicke von 0,14 mm und einer Maschenweite von 0,5 mm aufgebracht. Das Aufbringen erfolgte mit Hilfe einer 2 mm dicken Schablone, wobei das Pulver mit einem Sieb mit einer Maschenweite von 1 mm aufgebracht wurde. Überschüssiges Pulver, das über die Dicke der Schablone hinausragte, wurde mittels Abstreifer entfernt. Nach Entfernung der Schablone wurde der Träger mit der aufgebrachten Pulvermischung mittels einer Walzenpresse bei einer Presskraft von 0,5 kN/cm verpresst. Der Walzenpresse wurde das silberoxidbasierte Flächengebilde (SVE-Vorprodukt) entnommen.

Anschließend wurde das SVE-Vorprodukt in einen Elektrolyseur eingebracht, das als Elektrolyt eine Alkalihydroxid-Lösung enthielt, die einen pH Wert von 13,5 aufwies. Die elektrische Kontaktierung des SVE-Vorproduktes erfolgte über das Nickelnetz, auf dem die Pulvermischung aufgebracht wurde. Die Gegenelektrode war ein mit Iridiumoxid beschichtetes Titan-Streckmetall. Anode und das SVE-Vorprodukt hatten einen Abstand von 4 cm. Die Silberoxid-basierte Seite des SVE-Vorproduktes wurde dabei in Opposition zur Anode positioniert.

Das SVE-Vorprodukt wurde vor dem Einschalten des Elektrolysestromes für 2 h bei Raumtemperatur im Elektrolyt konditioniert.

Das SVE-Vorprodukt wurde mit einer Stromstärke von 1 kA/m² galvanostatisch solange reduziert, bis die Elektrolysespannung anstieg.

Die fertige SVE wurde anschließend dem Elektrolyseur entnommen. Nach Ablaufen des anhaftenden Elektrolyten wurde die Elektrode in einem Elektrolyseur mit deionisiertem Wasser abgespült und dann 24 h an Luft gelagert. Die mittlere Temperatur betrug dabei 21°C.

Die fertige SVE wurde bei der Elektrolyse einer Natriumchlorid-Lösung in einer Elektrolysezelle mit einer Ionenaustauschermembran von DuPONT N982WX und einem Natronlaugespalt zwischen SVE und Membran von 3 mm eingesetzt. Die Elektrolysespannung betrug 2,02 V bei einer Stromdichte von 4 kA/m², einer Elektrolyttemperatur von 90°C und einer Natronlauge-Konzentration von 32 Gew.-%. Als Anode wurde eine handelsübliche Titanelektrode mit einem edelmetalloxidbasierten Coating der Fa. DENORA zur Chlorherstellung bei einer NaCl-Konzentration von 210 g/l eingesetzt.

Das Potential der fertigen SVE wurde in der Elektrolysezelle mittels Elektrochemischer Impedanzspektroskopie (EIS) gegenüber der reversen Wasserstoffelektrode gemessen und betrug 801mV. Das Potential wurde um die ohmschen Anteile korrigiert. Aus der EIS-Messung wurde der Korrekturfaktor für den Elektrolytwiderstand bestimmt und mit diesem das gegen die reverse Wasserstoffelektrode unter diesen Bedingungen gemessene Potential der SVE korrigiert.

### Beispiel 2 (erfindungssemäß)

### Die Herstellung des silberoxidbasierten Flächengebildes erfolgte wie im Anwendungsbeispiel 1 beschrieben.

Für die Reduktion wurde das SVE-Vorprodukt mit einer wirksamen Fläche von 10 x 10 cm in eine Elektrolysezelle mit einem Elektrolytvolumen von 3,2 L eingesetzt. Als Elektrolyt wurde eine Natronlauge mit einer **Konzentration von 0,01 mol/L** verwendet. Zur Kühlung des Elektrolyten auf die Solltemperatur von 20 °C wurde dieser 12 Mal in der Stunde über einen mit einem Kryostaten verbundenen Wärmetauscher gepumpt. Als Anode wurde eine platinbeschichte Titanstreckelektrode eingesetzt, der Elektrodenabstand betrug 4 cm. Die Elektrolysezelle wurde mit einem Gleichrichter (Statron GmbH 36 V / 40 A) galvanostatisch betrieben.

Das SVE-Vorprodukt wurde trocken in die Elektrolysezelle eingesetzt, und zwar so, dass die silberoxidhaltige Seite des SVE-Vorprodukts der Anode gegenüber lag. 10 Minuten nach Einbau der Elektroden und Einfüllen des Elektrolyten wurde der Strom eingeschaltet. Aufgrund der schlechten elektrischen Leitfähigkeit des Elektrolyten konnte nur mit einer Stromdichte von 0,2 kA/m² gearbeitet werden. Nach 117 Minuten kam es zu einem deutlichen Anstieg der Zellspannung. Die Elektrolyse wurde beendet, nachdem die Zellspannung nach dem gemessenen Anstieg annähernd konstant blieb. Nach der Elektrolyse wurde die unter diesen Bedingungen reduzierte SVE aus der Zelle genommen und mit deionisiertem Wasser abgespült.

Unmittelbar nach dem Spülprozess erfolgte die Charakterisierung des elektrochemischen Verhaltens der reduzierten SVE mit Hilfe der elektrochemischen Impedanzspektroskopie (EIS). Die Messungen erfolgten in einer Halbzelle der Firma Gaskatel, in welcher der Kathodenprozess der Chloralkali-Elektrolyse nachgestellt werden kann. Für die Untersuchungen wurde aus der reduzierten SVE eine Probe mit den Abmessungen 7 x 3 cm entnommen und in die Zelle so als Kathode eingespannt, dass sie den Elektrolytraum und den Gasraum voneinander trennt. Die wirksame Fläche der Kathode betrug 3,14 cm². Als Anode diente eine Platinfolie und als Referenzelektrode eine reverse Wasserstoffelektrode. Der Elektrolyt war 32 %ige Natronlauge. An die SVE wurde eine Stromdichte von 4 kA/m² angelegt und der Elektrolyt gleichzeitig auf 80 °C erwärmt. In den Gasraum wurde Sauerstoff (99,5 %) eingeleitet. Als die Elektrolyttemperatur erreicht war, wurde die EIS-Messung im Frequenzbereich 100 mHz bis 20 kHz durchgeführt. Aus der EIS-Messung wurde der Korrekturfaktor für den Elektrolytwiderstand bei der Stromdichte von 4 kA/m² bestimmt und mit diesem das gegen die reverse Wasserstoffelektrode unter diesen Bedingungen gemessene Potential der SVE korrigiert. Das korrigierte Potential der unter diesen Bedingungen reduzierten Sauerstoffverzehrelektrode betrug 785 mV gegen die Normalwasserstoffelektrode.

### Beispiel 3 (erfindungssemäß)

### Die Herstellung des SVE-Vorprodukts erfolgte wie im Anwendungsbeispiel 1 beschrieben.

Für die Vorreduktion wurde das SVE-Vorprodukt mit einer wirksamen Fläche von 22 x 18 cm in eine Elektrolysezelle mit einem Elektrolytvolumen von 20,5 L eingesetzt. Als Elektrolyt wurde eine **Natronlauge mit einer Konzentration von 0,5 mol/L** verwendet. Zur Temperierung des Elektrolyten auf die Solltemperatur von 40°C wurde dieser 2,3 Mal in der Stunde über einen mit einem Kryostaten verbundenen Intensivkühler gepumpt. Der Elektrolyt wurde auf beiden Seiten der SVE über Fritten so eingeleitet, dass eine direkte Anströmung der SVE vermieden wurde. Als Gegenelektrode wurde eine iridiumoxidbeschichtete Titanstreckanode eingesetzt, der Elektrodenabstand betrug 4 cm.

Das silberoxidbasierte Flächengebilde wurde trocken in die Elektrolysezelle eingesetzt, und zwar so, dass die silberoxidhaltige Seite der Anode gegenüber lag. 30 Minuten nach Einbau des Elektroden und Einfüllen des Elektrolyten wurde der Strom eingeschaltet. Die kathodische Stromdichte betrug 1 kA/m². Nach 25 Minuten kam es zu einem Anstieg der Zellspannung um ca. 1 V. Nach insgesamt 30 Minuten wurde der Reduktionsprozess beendet. Die so reduzierte SVE wurde aus der Zelle genommen und beide Elektrodenseiten kurz mit deionisiertem Wasser abgespült. Die Elektrode wurde an Luft bei Raumtemperatur getrocknet und vor der elektrochemischen Charakterisierung 7 Tage unter diesen Bedingungen gelagert.

Die elektrochemische Charakterisierung erfolgte mittel elektrochemischer Impedanzspektroskopie wie im Anwendungsbeispiel 2 beschrieben. Bei einer Stromdichte von 4 kA/m² betrug das korrigierte Potential der unter diesen Bedingungen reduzierten SVE 803 mV gegen die reverse Wasserstoffelektrode.

### Beispiel 4 (erfindungssemäß)

### Die Herstellung des SVE-Vorprodukts erfolgte wie im Anwendungsbeispiel 1 beschrieben.

Für die Vorreduktion wurde das SVE-Vorprodukt mit einer wirksamen Fläche von 10 x 10 cm trocken in eine Elektrolysezelle mit einem Elektrolytvolumen von 3,2 L eingesetzt. Als Elektrolyt wurde eine **Natronlauge mit einer Konzentration von 0,5 mol/L** verwendet. Zur Temperierung des Elektrolyten auf die Solltemperatur von 40°C wurde dieser ca. 12 Mal in der Stunde über einen mit einem Kryostaten verbundenen Wärmetauscher gepumpt. Im Unterschied zu den bisherigen Anwendungsbeispielen enthielt die Elektrolysezelle **2 Anoden** die aus iridiumoxidbeschichteten Titanstreckmetall bestanden. Das silberoxidbasierte Flächengebilde wurde als Kathode mittig zwischen die beiden Anoden eingehängt, der Abstand zu den Anoden betrug jeweils 4 cm.

30 Minuten nach Einfüllen des Elektrolyten wurde der Strom eingeschaltet. Zunächst wurde ein Versuch mit einer Stromdichte von 0,5 kA/m² durchgeführt, bei dem die Reduktion nach 26 Minuten beendet war. Nach der Reduktion wurde die SVE aus der Zelle entnommen und mit deionisiertem Wasser abgespült. Ohne Elektrolytwechsel wurde in die Zelle ein neues silberoxidbasiertes Flächengebilde als Kathode eingesetzt und diesmal bei einer Stromdichte von 1°kA/m² reduziert. Die Reduktionsdauer betrug hier 13 Minuten. Nach der Reduktion wurde die SVE aus der Zelle entnommen und mit deionisiertem Wasser abgespült.

Unmittelbar nach dem Spülprozess erfolgte die Charakterisierung des elektrochemischen Verhaltens der beiden reduzierten SVE mit Hilfe der elektrochemischen Impedanzspektroskopie wie im Anwendungsbeispiel 2 beschrieben. Bei einer Stromdichte von 4 kA/m² betrug das korrigierte Potential der reduzierten SVE 796 mV bezogen auf die reverse Wasserstoffelektrode.

### Beispiel 5 (Vergleichsbeispiel)

### Die Herstellung des SVE-Vorprodukts erfolgte wie im Anwendungsbeispiel 1 beschrieben.

Für die Vorreduktion wurde das SVE-Vorprodukt mit einer wirksamen Fläche von 10 x 10 cm trocken in eine Elektrolysezelle mit einem Elektrolytvolumen von 3,2 L eingesetzt. Im Unterschied zu den bisherigen Anwendungsbeispielen wurde als Elektrolyt eine **Kaliumsulfatlösung mit einer Konzentration von 50 g/L** verwendet, dem H₂SO₄ zugegeben wurden, so dass der pH-Wert des verwendeten Elektrolyten 4,6 betrug. Zur Temperierung des Elektrolyten auf die Solltemperatur von 20 °C wurde dieser ca. 12 Mal in der Stunde über einen mit einem Kryostaten verbundenen Wärmetauscher gepumpt. Die Elektrolysezelle enthielt **eine Anode,** die aus platinbeschichtetem Titanstreckmetall bestand. Der Abstand zwischen dem als Kathode fungierendem silberoxidbasierten Flächengebilde und der Anode betrug 6,5 cm.

30 Minuten nach Einfüllen des Elektrolyten wurde der Strom eingeschaltet. Die Reduktion fand bei einer Stromdichte von 1,5 kA/m² statt und wurde nach 35 min beendet. Nach der Reduktion wurde die SVE aus der Zelle entnommen und mit deionisiertem Wasser abgespült.

Unmittelbar nach dem Spülprozess erfolgte die Charakterisierung des elektrochemischen Verhaltens der reduzierten SVE mit Hilfe der elektrochemischen Impedanzspektroskopie wie im Anwendungsbeispiel 2 beschrieben. Bei einer Stromdichte von 4 kA/m² betrug das korrigierte Potential der reduzierten SVE 697 mV bezogen auf die reverse Wasserstoffelektrode. Auf Grund des um ca. 100 mV niedrigeren korrigierten Potentials der in diesem Beispiel beschrieben reduzierten SVE im Vergleich zur der im Anwendungsbeispiel 1 - 4 beschriebenen erfindungsgemäßen Herstellungsverfahren, ist eine um mindestens 100 mV höhere Elektrolysespannung der wie im Anwendungsbeispiel 1 beschriebenen Chlor-Alkali-Elektrolyse zu erwarten.

### Beispiel 6 (Vergleichsbeispiel)

### Die Herstellung des SVE-Vorprodukts erfolgte wie im Anwendungsbeispiel 1 beschrieben.

Für die Vorreduktion wurde das SVE-Vorprodukt mit einer wirksamen Fläche von 10 x 10 cm trocken in eine Elektrolysezelle mit einem Elektrolytvolumen von 3,2 L eingesetzt. Im Unterschied zu den bisherigen Anwendungsbeispielen wurde als Elektrolyt eine **Natriumsulfatlösung mit einer Konzentration von 50 g/L** verwendet. Der pH-Wert des verwendeten Elektrolyten betrug 6,1. Zur Temperierung des Elektrolyten auf die Solltemperatur von 20 °C wurde dieser ca. 12 Mal in der Stunde über einen mit einem Kryostaten verbundenen Wärmetauscher gepumpt. Die Elektrolysezelle enthielt **eine Anode,** die aus platinbeschichtetem Titanstreckmetall bestand. Der Abstand zwischen dem als Kathode fungierendem silberoxidbasierten Flächengebilde und der Anode betrug 6,5 cm.

30 Minuten nach Einfüllen des Elektrolyten wurde der Strom eingeschaltet. Die Reduktion fand bei einer Stromdichte von 0,3 kA/m² statt und wurde nach 95 min beendet. Nach der Reduktion wurde die SVE aus der Zelle entnommen und mit deionisiertem Wasser abgespült.

Unmittelbar nach dem Spülprozess erfolgte die Charakterisierung des elektrochemischen Verhaltens der reduzierten SVE mit Hilfe der elektrochemischen Impedanzspektroskopie wie im Anwendungsbeispiel 2 beschrieben. Bei einer Stromdichte von 4 kA/m² betrug das korrigierte Potential der reduzierten SVE 641 mV bezogen auf die reverse Wasserstoffelektrode. Auf Grund des um ca. 150 mV niedrigeren korrigierten Potentials der in diesem Beispiel beschrieben reduzierten SVE im Vergleich zur der im Anwendungsbeispiel 1 - 4 beschriebenen erfindungsgemäßen Herstellungsverfahren, ist eine um mindestens 150 mV höhere Elektrolysespannung der wie im Anwendungsbeispiel 1 beschriebenen Chlor-Alkali-Elektrolyse zu erwarten.

## Patentansprüche

1. Verfahren zur Herstellung einer flächigen Sauerstoffverzehrelektrode, mindestens aufweisend einen Träger, eine Gasdiffusionsschicht und eine, einen auf Silber basierenden Katalysator enthaltende Schicht umfasst, **dadurch gekennzeichnet, dass** der Träger mit einem silberoxidhaltigen Gemisch aus Elektrokatalysator und einem hydropoben Material unter Formung eines silberoxidhaltigen Flächengebildes als Vorprodukt beschichtet wird und das silberoxidhaltige Flächengebilde in einem wässrigen Elektrolyt bei einem pH Wert von mindestens 10, insbesondere in Gegenwart von Alkalilauge, besonders bevorzugt von Natronlauge, elektrochemisch reduziert und die entstandene Elektrode anschließend möglichst weitgehend vom wässrigen Elektrolyt befreit wird.

2. Verfahren nach Anspruch 1, **dadurch gekennzeichnet, dass** der Träger elektrisch leitend ausgebildet ist.

3. Verfahren nach einem der Ansprüche 1 oder 2, **dadurch gekennzeichnet dass** Elektrolyt zusätzlich Salze eines Elementes aus der Alkali- oder Erdalkaligruppe enthält.

4. Verfahren nach Anspruch 3, **dadurch gekennzeichnet dass** der Elektrolyt zusätzlich Alkalisulfate oder Alkalinitrate, besonders bevorzugt Alkalinitrate, ganz besonders bevorzugt ein Gemisch aus Natriumnitrat und Natriumsulfat enthält.

5. Verfahren nach einem der Ansprüche 1 bis 4, **dadurch gekennzeichnet, dass** die Stromdichte bei der Reduktion mindestens 0,01 kA/m², bevorzugt 0,01 bis 6 kA/m² beträgt.

6. Verfahren nach einem der Ansprüche 1 bis 5, **dadurch gekennzeichnet, dass** der Elektrolyt höchstens 1.000 mg/L Chlorid, bevorzugt höchstens 700 mg/L Chlorid, besonders bevorzugt höchstens 500 mg/L Chlorid enthält.

7. Verfahren nach einem der Ansprüche 1 bis 6, **dadurch gekennzeichnet, dass** die elektrochemische Reduktion bei einer Temperatur im Bereich von 10 bis 90 °C, bevorzugt bei 20°C bis 80°C, besonders bevorzugt 30 bis 60°C erfolgt.

8. Verfahren nach einem der Ansprüche 1 bis 7, **dadurch gekennzeichnet dass** die Reduktion des Silberoxids in dem silberoxidhaltigen Flächengebilde zu über 50 %, bevorzugt über 90 %, besonders bevorzugt vollständig erfolgt.

9. Verfahren nach einem der Ansprüche 1 bis 8, **dadurch gekennzeichnet dass** das silberoxidhaltige Flächengebilde als Vorprodukt für die Elektrode wenigstens miteinander verpresstes Silberoxid-Pulver und PTFE-Pulver umfasst.

10. Verfahren nach einem der Ansprüche 1 bis 9, **dadurch gekennzeichnet dass** das silberoxidhaltige Flächengebilde als Vorprodukt für die Elektrode bei der Reduktion zwischen zwei Anoden angeordnet wird.

11. Verfahren nach einem der Ansprüche 1 bis 10, **dadurch gekennzeichnet dass** das silberoxidbasierte Flächengebilde vor Einbringung in die Reduktionsapparatur durch Einlegen in Wasser oder bevorzugt in den später während der elektrochemischen Reduktion verwendeten Elektrolyten, insbesondere über einen Zeitraum von mindestens 0,01 Stunden, vorbehandelt wird.

12. Verfahren nach einem der Ansprüche 1 bis 11, **dadurch gekennzeichnet dass** die Reduktion bei einer Stromdichte von mindestens 0,01 kA /m² durchgeführt wird.

13. Verfahren nach einem der Ansprüche 1 bis 12, **dadurch gekennzeichnet dass** die Befreiung der Elektrode vom Elektrolyt nach der Reduktion durch Spülen und Behandeln mit deionisiertem Wasser und anschließende Trocknung erfolgt.

14. Verfahren nach einem der Ansprüche 1 bis 13, **dadurch gekennzeichnet, dass** die Gasdiffusionsschicht und die Elektrokatalysator enthaltende Schicht durch eine einzige Schicht gebildet werden.

15. Verfahren nach einem der Ansprüche 1 bis 8, **dadurch gekennzeichnet, dass** die Gasdiffusionsschicht und die Elektrokatalysator enthaltende Schicht durch mindestens zwei unterschiedliche Schichten gebildet werden.

16. Sauerstoffverzehrelektrode erhalten nach einem Verfahren gemäß einem der Ansprüche 1 bis 15.

17. Verwendung der nach einem Verfahren gemäß einem der Ansprüche 1 bis 15 gefertigten Sauerstoffverzehrelektrode als Sauerstoff verzehrende Kathode in der Elektrolyse, bevorzugt in der Chloralkali-Elektrolyse, oder als Elektrode in einer Brennstoffzelle oder als Elektrode in einer Metall/Luft-Batterie.
